(19) Europäisches Patentamt
European Patent Office
Office européen des brevets

(11) **EP 3 146 415 B1**

(12) **EUROPEAN PATENT SPECIFICATION**

(45) Date of publication and mention
of the grant of the patent:
**26.06.2019 Bulletin 2019/26**

(21) Application number: **14759192.9**

(22) Date of filing: **04.09.2014**

(51) Int Cl.:
***G06F 3/044*** *(2006.01)*   ***G06F 3/041*** *(2006.01)*

(86) International application number:
**PCT/EP2014/068871**

(87) International publication number:
**WO 2014/177726 (06.11.2014 Gazette 2014/45)**

(54) **METHOD, APPARATUS AND COMPUTER PROGRAM FOR LOCALIZING AN ACTIVE STYLUS ON A CAPACITIVE TOUCH DEVICE**

VERFAHREN, VORRICHTUNG UND COMPUTERPROGRAMM ZUR LOKALISIERUNG EINES AKTIVEN EINGABESTIFTS AUF EINER KAPAZITIVEN BERÜHRUNGSVORRICHTUNG

PROCÉDÉ, APPAREIL ET PROGRAMME D'ORDINATEUR POUR LOCALISER UN STYLET ACTIF SUR UN DISPOSITIF TACTILE CAPACITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2014 CH 768142014**

(43) Date of publication of application:
**29.03.2017 Bulletin 2017/13**

(73) Proprietor: **Advanced Silicon SA**
**1007 Lausanne (CH)**

(72) Inventor: **WEISHAUPT, Andreas**
**CH-3174 Thörishaus (CH)**

(74) Representative: **P&TS SA (AG, Ltd.)**
**Av. J.-J. Rousseau 4**
**P.O. Box 2848**
**2001 Neuchâtel (CH)**

(56) References cited:
WO-A1-03/052676     US-A1- 2012 154 324
US-A1- 2013 257 783     US-A1- 2013 278 550
US-B1- 7 162 098     US-B1- 7 437 003

**Description**

Field of the invention

The present invention concerns a method, apparatus and computer program for localizing an active stylus on a capacitive touch device.

Description of related art

Capacitive touch devices comprise capacitive sensors used in various application fields in which object presence detections are involved, such as, but not limited to, touch pads, touch panels, touch screens or projective capacitive displays.

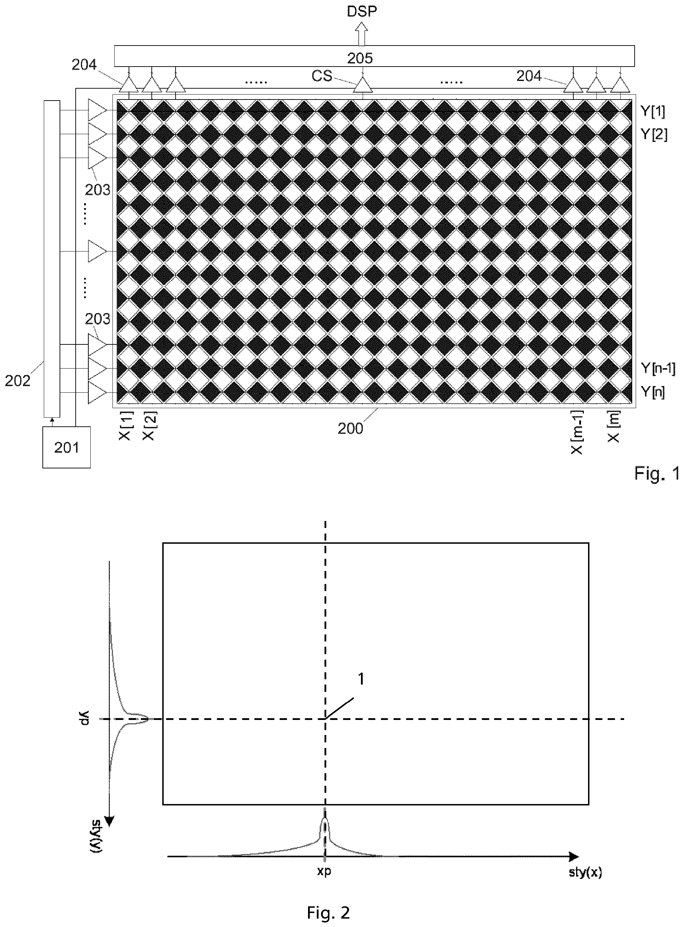

Fig. 1 illustrates an example of known capacitive touch device 200. It comprises a first number of rows n (Y[1] to Y[n]) and a second number of columns m (X[1] to X[m]) at the intersection of which are the sensing capacitors. In correspondence of each column X[1] to X[m] there is a charge sensor (CS) 204. In correspondence of each row Y[1] to Y[n] there is a charge driver (CD) 203. The m charge sensors 204 measure sequentially the n voltage stimuli sent by the n charge drivers. A digital signal processor (DSP) can detect the capacity change in the sensed signals, when a finger or a passive pen touches the touch panel. The charge drivers 203 are enabled sequentially by a token, which is a voltage signal circulating inside the shift register 202. A timing controller 201 generates all necessary timings for proper operation. Once a token has passed through all the charge drivers 203, the touch column data acquisition module 205 processes during a touch sample data corresponding to a charge image F of mxn pixels, so as to detect one or more finger touches.

When it comes to writing on a capacitive touch device, the use of a stylus (or pen) permits a more comfortable and accurate interaction between the user and an underlying application. A stylus can be passive or active. A passive stylus does not emit any signal: in other words it is an object touching the capacitive touch device and simulating a finger. Although passive styluses are simple, cheap and offer acceptable solutions for sketching, they do not easily allow the differentiation between a pen touch and a finger touch.

The biggest challenge from an algorithmic point of view is the Stylus Paradoxon: as the tip size is smaller than a finger, the user expects to have a higher precision of his actions. However, given the physical reality, the small tip leads to high injection loss and therefore to signal that contains far less energy than that of a finger. The signal-to-noise ratio may be increased by more complex detection algorithms. However, more complex detection algorithms require more computation time (or higher computation power) which decreases the resolution with respect to time. Therefore, the challenge is to maximize the signal-to-noise ratio (SNR) such that the precision of the estimated pen positions meets the user expectations, all this while providing estimates of that precision at very short intervals in time. At the same time the computation power should be minimized in order to provide an energy efficient device.

Active styluses have higher writing performances, for example when the stylus tip moves fast along short curves or short distances. The active stylus emits a signal which is detected at a first number of sensors along the columns and at a second number of sensors along the rows. Therefore, the detection of an active pen requires another hardware which can also detect the signal received from the pen in dependence of the rows. Therefore, during one sample frame a vector fx for the column measurements and a vector fy for the row measurements are produced. Normally, those measurements are received sequentially, e.g. column-by-column, row-by-row or point-by-point. On the basis of the vectors fx and fy in the present sample frame, the position 1 of the stylus on the touch screen with the coordinates (xp, yp) is detected on the basis of the peak-to-peak voltage measured as shown in Fig. 2. However, the influence of the noise and the low number of samples in the region of position 1 of the stylus leads also to serious difficulties in estimating the exact position 1 of the stylus.

US2013278550 discloses an active stylus for a capacitive touch sensor. The stylus position is determined first with a pixel precision on the basis of the maximum capacity measured in the rows and columns. Then in a second step, a continuous function is fitted on a data window around the pixel corresponding to the maximum capacity.

US2013257783 discloses a method for detecting multiple touches on a capacitive touch screen. The detection of the multiple touches is achieved by a matching pursuit algorithm, which is used to find the optimal sparsity matrix for detecting the correct measurements.

US2012154324 discloses that the size of the data window used for computing the centre of gravity of a touch depends on the velocity of the touch on the screen. It is further disclosed to scan the area around a detected touch more frequently than the other touch pixels.

US7437003 discloses a method for optimal downsampling the data points of writing by iteratively repeating downsampling and upsampling. Also WO03052627 and US7162098 disclose upsampling methods.

Brief summary of the invention

According to the invention, this aim is achieved by a method for localizing an active stylus on a capacitive touch device, the capacitive touch device comprising a first array of charge sensors in a first direction, and a second array of charge sensors in a second direction different from the first direction, wherein the first array of charge sensors is arranged for measuring a first data vector, the second array of charge sensors is arranged for measuring a second data vector, the method comprising the following steps:

-    localizing the active stylus with a first precision,
-    localizing the active stylus with a second precision higher than the first precision
     wherein the step of localizing the active stylus with a first precision comprises:

     -    localizing active stylus touch candidates,

and wherein the step of localizing the active stylus with a second precision comprises:

     -    fitting a model function to each active stylus touch candidate,
     -    associating a fitting score to said fitting,
     -    discarding active stylus touch candidates depending on said fitting score and a fitting threshold.

Advantageously the method according to the invention allows high precision in acceptable computation time, in particular for small stylus tip sizes, i.e. for stylus tip size less than 2 mm, e.g. 1 mm.
The dependent claims refer to further advantageous embodiments.
In one preferred embodiment, the model function is subtracted from the first data vector and the second data vector, before fitting the model function to a subsequent active stylus touch candidate. This subtraction, named "matching pursuit algorithm", allows a correct localization of further active stylus' that remain to be found in the measured data, because the data of the further active stylus' are not influenced by the active stylus' already detected.
In one embodiment, the step of localizing the active stylus with a first precision comprises: localizing a best of the active stylus touch candidates, and wherein the step of localizing the active stylus with a second precision comprises: fitting a model function to the best of the active stylus touch candidates, subtracting the fitted model function from the first data vector and the second data vector, and wherein the steps of localizing the active stylus with a first precision and localizing the active stylus with a second precision are repeated for the first data vector and the second data vector subtracted by the fitted model. This approach has the advantage that the active stylus touch candidates are treated in an order from the best to the worst, while after each iteration, it is decided which is the best active stylus touch candidate on the basis of the data corrected by the already detected active stylus touch candidates. Therefore, the less clear active stylus touch candidates are fitted without the data of the better active stylus touch candidates such that the position estimation for those active stylus touch candidates is improved.
In one embodiment, the first precision is a pixel-precision, and the second precision is a sub-pixel precision.
The steps related to the model fitting approach allow a localization of an active stylus quite precise. It requires computationally complex modules, but if applied to two independent vectors instead of an image, it is computationally acceptable.
In another embodiment, instead of using the model fitting approach, it is possible to use a centroid or center-of mass approach, which is a heuristic technique for recovering a sub-pixel precision position of a distribuation's peak center. However noise and bias can make this approach fail. Moreover it is good only if the distribution is well sampled.
In another embodiment, the step of localizing active stylus touch candidates comprises:

-    find maxima in the first and in the second data vectors by using a threshold,
-    computing a candidate score for each maximum in the first and in the second data vectors,
-    on the basis of said candidate score, selecting the maximum in the first and in the second data vectors as a coordinate of the active stylus touch candidate. The selected maximum could be used as best active stylus touch candidate.

The candidate score can depend on the tracking of the active stylus at a previous temporal instance.
In one preferred embodiment, the method according to the invention comprises also:

-    upsampling the data of the first data vector and/or the second data vector in a region of the capacitive touch screen by using a sinc Kernel.

This kind of upsampling results in optimal reconstruction of the signal of the active stylus, which is very band-limited. The signal is band-limited in the sense that it is well-defined on a small mathematical region, i.e. 1 to 8 pixels, it's peaked in the center of the region and decaying exponentially towards zero, when approaching the region's boarders. This means that its Fourier Transform exists, and that it is band-limited, i.e. its Fourier Transform will decay towards zero for frequencies approaching the Nyquist frequency

The upsampling can be perfomed by using a Fast Fourier Transform (FFT), notably a 2D FFT. In particular, since a 2D FFT is a separable operation along the vertical and the horizontal axis, it is possible to:

- apply a 1D Fast Fourier Transform to the first data vector in the region, and
- apply a 1D Fast Fourier Transform to the second data vector in the region.

In one preferred embodiment, the method according to the invention comprises also:

- zero padding the Fourier transformed data.

In one preferred embodiment, the region has a rectangular shape having at least a side of $2^n$ pixels, wherein n is an integer number.
In one preferred embodiment, the method according to the invention comprises also:

- executing a windowed centroid computation, wherein the size of the window is adaptively based on the signal emitted from the active stylus, e.g. the first and the second data vectors.

Advantageously this windowed centroid computation allows to save computational resources, and avoid pixel-locking and stair-casing.
In one preferred embodiment, an odd window size, i.e. comprising an odd number of pixels, is used if the signal emitted from the active stylus has an odd-sample symmetry, and an even window size, i.e. comprising an even number of pixels, is used if the signal emitted from the active stylus has an even-sample symmetry.
According to a possible independent aspect of the invention, the present invention concerns also a method for localizing an object (e.g. finger, active stylus, passive stylus, etc.) on a capacitive touch device comprising the steps of:

- scanning the sensing elements during a time frame,
- detecting the position of the active stylus on the basis of this scanning,
- determining a detection region around the detected position of the active stylus, said detection region comprising a sub-set of sensing elements,
- during the next time frames, scanning the sub-set of sensing elements more frequently than the sensing elements outside said detection region.

In one preferred embodiment, the method comprises a first measurement mode, when the position of the active stylus is not detected, and a second measurement mode, when the position of the active stylus is detected, wherein in the second measurement mode, the sub-set of sensing elements are scanned more frequently than the sensing elements outside said detection region.
The present invention concerns also an apparatus for localizing an active stylus on a capacitive touch device, the capacitive touch device comprising a first array of charge sensors in a first direction, and a second array of charge sensors in a second direction different from the first direction, wherein the first array of charge sensors is arranged for measuring a first data vector, the second array of charge sensors is arranged for measuring a second data vector, the apparatus comprising:

- a first computing module arranged for localizing the active stylus with a first precision,
- a second computing module arranged for localizing the active stylus with a second precision higher than the first precision

wherein the first computing module is arranged for:

- localizing active stylus touch candidates,

and wherein the second computing module is arranged for:

- fitting a model function to each active stylus touch candidate,
- associating a fitting score to said fitting,
- discarding active stylus touch candidates depending on said fitting score and a fitting threshold.

In one embodiment, the first computing module and the second computing module being the same module.

The present invention concerns also a computer program product for localizing an active stylus on a capacitive touch device, the capacitive touch device comprising a first array of charge sensors in a first direction, and a second array of charge sensors in a second direction different from the first direction, wherein the first array of charge sensors is arranged for measuring a first data vector, the second array of charge sensors is arranged for measuring a second data vector, comprising: a tangible computer usable medium including computer usable program code for localizing an active stylus on a capacitive touch device, the computer usable program code being used for

- localizing the active stylus with a first precision,
- localizing the active stylus with a second precision higher than the first precision
  wherein the step of localizing the active stylus with a first precision comprises:

  - localizing active stylus touch candidates,

and wherein the step of localizing the active stylus with a second precision comprises:

  - fitting a model function to each active stylus touch candidate,
  - associating a fitting score to said fitting,
  - discarding active stylus touch candidates depending on said fitting score and a fitting threshold.

The present invention concerns also a computer data carrier storing presentation content created with the method according to the invention.

Brief Description of the Drawings

The invention will be better understood with the aid of the description of an embodiment given by way of example and illustrated by the figures, in which:

Fig. 1 shows a view of a known capacitive touch device;

Fig. 2 shows a view of a known method to determine the position of an active stylus.

Fig. 3 shows a view of a capacitive touch device which can be used for detecting active pens;

Fig. 4 shows a schematic view of an apparatus for determining a position of an object on a surface with sensing elements;

Fig. 5 shows a schematic view of a method for detecting a position of multiple objects on a surface with sensing elements;

Fig. 6 shows the detection problem of multiple objects being located close together;

Fig. 7 shows the improved detection, when one object pattern in the data is removed;

Fig. 8 shows two measurement modes for measuring the output values of the sensing elements of said surface;

Fig. 9A shows a measurement pattern for different sensing elements for the first measurement mode;

Fig. 9B to 9D show different measurement patterns for different sensing elements for the second measurement mode; and

Fig. 10 show a measurement patterns for one sensing element for the first measurement mode and the second measurement mode.

Detailed Description of possible embodiments of the Invention

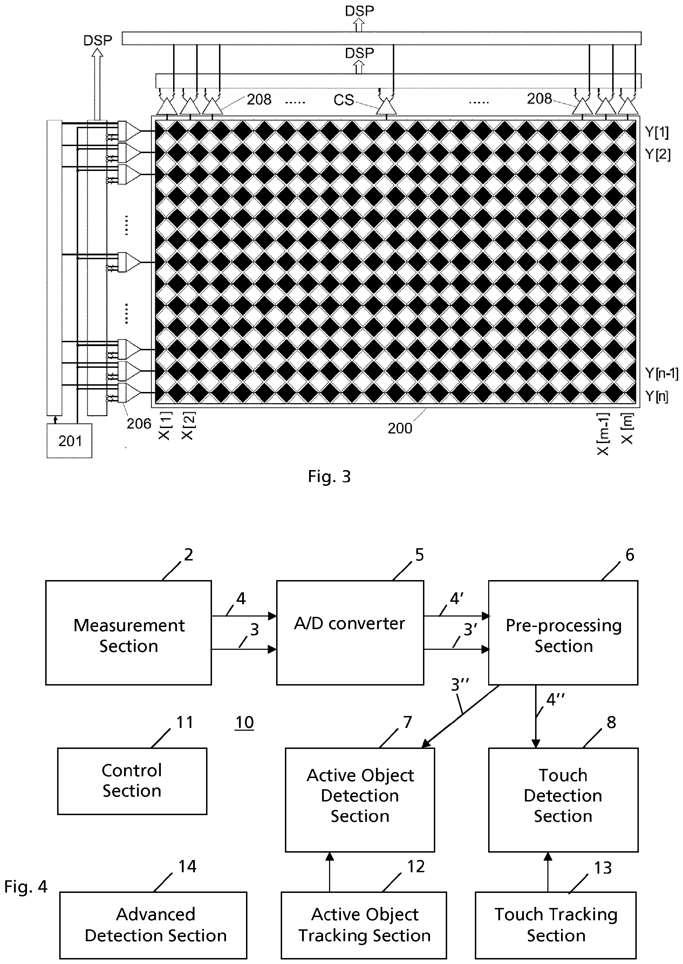

Fig. 3 shows an embodiment of a touch panel 200. The touch panel 200 comprises a plurality of sensing elements which are distributed over the touch panel 200, preferably in rows and columns. In the present embodiment, capacitive elements are used for the plurality of sensing element. However, any other sensing elements can be used. The touch panel 200 is configured to detect finger touches and the presence of an active pen. The touch panel 200 is especially configured for a pen which continuously emits a signal, e.g. a sinus or also a modulated wave signal. In order to detect a touch position on the touch panel 200, e.g. by a finger, n charge drivers (CD) 206 sequentially input a charge stimulus. For each charge stimulus input by one charge driver 206 the output values at the m charge sensors (CS) 208 are measured (sequentially or at once), which is given to the DSP for the detection of the touch position. In order to emit the charge stimulus at the i-th charge driver, a switch is closed in the i-th charge driver. The switches of the n charge drivers are controlled by the controller 201.

In order to measure position of an active pen, the charge sensors 208 can be used during a moment of inactivity (reset phase). Instead of providing additional charge sensors for the active stylus, the same charge sensors 208 used for detecting the presence of a finger can be used to measure the signal emitted by the active pen. In particular, a current over the non-ideal open switch of the charge sensor 208 can be used in order to measure the voltage induced by the signal of the active pen. However, in an alternative embodiment, also additional charge sensors for the pen could be used.

In one embodiment, the active pen continuously emits a signal, preferably an oscillating signal such that the active pen and the touch panel must therefore not be synchronized to each other. "Continuously emitting" means here that the pen emits a signal without interruption over the time period of determining at least two measurement time frames, wherein in each measurement time frame all the sensing elements are scanned/measured once or as described later in the second measurement mode in one measurement time frame only a sub-set of all sensing elements are measured once. However, it is also possible to use pens which emit the signal only in certain time frames, e.g. time frames for measuring the position of an active pen. Preferably, the output values of the charge drivers 206 and the charge sensors 208 for the active pen are captured row-by-row, column-by-column or pixel by pixel. However, the measurements of all charge drivers 206 and of all charge sensors 208 could also be performed at once. The invention will be described at the example of this touch panel 200. However, the invention can be used together with any other touch panel, e.g. a touch panel of Fig. 1 or a touch panel which can only detect active pens. Instead of capacitive touch panels 200 also other sensing mechanisms could be used.

In order to determine a good estimator of the present position 1 of an active stylus, the following assumptions are made.

The measurement vectors along the columns f(x,t) and along the rows f(y,t) for the sampling time frame t are

$$f(x,t) = pen(t)\big[g\big(x; p_x(t)\big) + d\big(x; p_x(t)\big)\big] + n_x(t) \qquad (1)$$

$$f(y,t) = pen(t)\left[g\left(y; p_y(t)\right) + d\left(y; p_y(t)\right)\right] + n_y(t). \qquad (2)$$

Pen(t) is a random process that can take the values zero, if the pen is not present and one, if the pen is present. If the pen is not present, only the measurement noise processes $n_x(t)$ and $n_y(t)$ caused by the sensors are measured. It is assumed that the noise processes resulting from AGWN with mean 0 and variance at the input of the peak detector. Supposedly the peak detector follows an ideal instant envelope detection scheme (without going into peak detector implementation details) and results from a nonlinear transformation of the original AGWN. In this case and then are supposed to follow a Rayleigh distribution with the magnitude at the peak detector output and again the noise variance of the AGWN at the input.

If the pen is present additionally Gaussian distributions around the position 1 of the pen is measured

$$g\big(x; p_x(t)\big) = a\, e^{-\frac{(x - b_x(t))^2}{c^2}} \qquad (3)$$

$$g\big(y; p_y(t)\big) = a\, e^{-\frac{(y - b_y(t))^2}{c^2}}, \qquad (4)$$

where $p_x(t) = (\alpha, b_x(t), c)$ and $p_y(t) = (\alpha, b_y(t), c)$ are the parameters of the Gaussian distribution magnitude, position x or y, and spread, respectively, introduced by the presence of the pen. The random processes $b_x(t)$ and $b_y(t)$ correspond to the instant position of the pen. Both random processes $b_x(t)$ and $b_y(t)$ have unknown probability density function and are wide-sense non-stationary.

The random process background functions $d(x; p_x(t))$ and $d(y; p_y(t))$ depend on the presence of the pen, and on the Gaussians introduced by the pen. For the sake of simplicity, they are supposed to be constants $d(x; p_x(t)) = d_{x0}$ and $d(y; p_y(t)) = d_{y0}$.

Fig. 4 shows an embodiment of an apparatus 10 for determining a position of an object on a surface. The apparatus 10 might be a touch screen, a touch pad, an active pen pad or any other apparatus for determining the position of an object on a surface. The apparatus 10 might also be a module receiving the measurement data of a touch screen, a touch pad, an active pen pad and giving back the position of an object. An object might be a finger touching the surface or a pen touching the surface or an active pen being on or in the vicinity of the surface. The apparatus 10 can be realized in hardware and/or in software.

The apparatus 10 comprises a measurement section 2, an analogue-to-digital-converter 5, a pre-processing section 6, an active object detection section 7, a touch detection section 8, a control section 11, an active object tracking section 12, a touch tracking section 13 and an advanced detection section 14.

The measurement section 2 comprises a plurality of sensing elements configured to detect the position of an object touching the surface or of an object emitting a signal (like an active pen). In the present embodiment the measurement section 2 comprises measurement system as described in Fig. 3. Therefore, the sensing elements are the combination of charge drivers 206 (used also as sensors for the active pen) and charge sensors 208. However, any other measurement system can be used. The measurement section 2 for the touch measurement (touch mode, e.g. for fingers or passive pens), sequentially driven charge drivers 206 send a signal which is measured/received by the charge sensors 208. Therefore, the measurement section gives out the measurement data 4 for the touch measurement (touch mode, e.g. for fingers of passive pens), measuring the values of the charge sensors 208 for sequentially driven charge drivers 206. Therefore, the measurement section 2 gives out as measurement data 4 an image F filled in the y-th row with the measurements of the charge sensors 208, i.e. the value of F in the y-th row and of the x-th column corresponds to the sensing element of the combination of the y-th charge driver 206 and the x-th charge sensor 208. The measurement section 2 gives further out the measurement data 3 for the active pen measurements (active pen/object mode), measuring the values in the X and Y directions measured during an active pen measurement period. Therefore, the measurement data 3 during the active pen measurement period is preferably a first vector fx with the output values of the m charge sensors 208 and a second vector fy with the output values of the n charge drivers 206. However, also additional sensing elements (not the charge drivers 206) could be used in order to detect the signal of the active pen. Therefore, in the active pen mode each charge sensor 208 and each charge driver 206 work as a sensing element. Alternatively, the measurement section 2 could give out the image obtained by multiplying the column vector fx with the row vector fy resulting in the matrix Fpen(x,y)=fx(x)*fy(y). The measurement section 2 is controlled by the control section 11 which controls for example the timing, when measurements for an active pen and when measurements for a touch (finger or passive pen) are performed. The output values of the charge sensors 208 and/or of the charge drivers 206 are normally obtained sequentially and the sequence and order of measurements is also controlled by the control section 11. However, the invention is not restricted to the measurement system of Fig. 3. Any other measurement system for measuring the position of a touch and/or of an active pen is possible. The measurement section 2 is not essential for the invention and can be arranged outside of the apparatus 10 so that apparatus 10 receives the measurement data of the measurement section 2 and evtl. controls the measurement section 2.

The analogue-to-digital converter 5 is configured to convert the analogue output values 3 of the active pen measurements of the measurement section 2 to digital output values 3' of the active pen measurements and to convert the analogue output values 4 of the touch measurements of the measurement section 2 to digital output values 4' of the touch measurements. The analogue-to-digital-converter 5 could also be configured to convert only the analogue output values 3 of the active pen measurements of the measurement section 2 to digital output values 3' of the active pen measurements or to convert only the analogue output values 4 of the touch measurements of the measurement section 2 to digital output values 4' of the touch measurements 4', if only one of those two measurements are captured in the measurement section 2. The analogue-to-digital-converter 5 is not essential and can be arranged outside of the apparatus 10 so that apparatus 10 receives already the digital measurement data of the measurement section 2.

The pre-processing section 6 is configured to pre-process the output values 3' and/or 4' received from the Analogue-to-Digital converter 5.

In one embodiment, the pre-processing section 6 combines for each sensing element several (at least two) timely successive output values of this sensing element to one improved output value with a reduced error. The touch detection section 8 and the active object detection section 7 detect the position of a physical touch or of an active pen with a certain detection frequency, i.e. after each detection time frame the positions of all objects touching the surface or of all active pens being on the surface in the detection time window are detected once. Therefore, in the described embodiment, the position detection within one detection time window is based on several realizations of each sensing element in order to achieve a more significant improved set of output values for the subsequent position detection. Therefore, a detection time frame would be larger than a measurement time frame. However, if there is no averaging, the detection time frame could be identical to the measurement time frame. Depending on the noise distribution, either a mean or a median can be used to combine the timely successive measurements. This is especially advantageous for the measurements for the active pen mode, because the measurements of the active pen have a higher error. For measurements for the active pen mode, preferably, a plurality of measurement vectors fx are combined and a plurality of measurement vectors fy are combined. This has the advantage that the computational work is reduced compared to combining the whole image F resulting by the multiplication of fx and fy. However, this averaging step can also be applied directly on the image F and/or for the measurements 4' of the touch mode. However, this averaging step is not essential and can be omitted.

In one embodiment of the pre-processing section 6, a median filter is applied on the measurement data 3'and 4'. For the measurement data 3'of the active pen mode, the median filter is applied first on the vector fx and fy independently. Alternatively, if the measurement data 3'of the active pen mode is an image, a two-dimensional median filter could be applied on the measurement data 3'. This median filtering step is especially advantageous for the active pen mode, but can also be applied for the measurement data 4' for the touch mode. Preferably, the median filtering step is applied after the previously mentioned averaging step. However, it is also possible that this step is applied before or without the previously mentioned averaging step. However, also this median filtering step is not essential and can be omitted.

In one embodiment of the pre-processing section 2, the measurement data 3' of the active pen mode are transferred into a measurement image by the outer product of the measurement vectors fx and fy resulting in the picture Fpen;raw with the picture elements Fpen;raw(x,y) of the x-th column and of the y-th row

$$f_{pen;raw}(x;y) = f_x(x) \cdot f_y(y) \qquad (5)$$

being computed by multiplying the x-th element of the vector fx with the y-th element of the vector fy. This step can be omitted, if the measurement data 3' received from the analogue-to-digital converter 5 and/or from the measurement section 2 are already in the form of an image Fpen;raw. Preferably, this step is performed after the averaging step and/or after the median filtering step. However, any other selection or order of those three steps can be applied.

In one embodiment of the pre-processing section 6, the measurement data 3' and/or 4' are equalized on the basis of a background function Fref, which is a long-term average of the raw touch input images, typically computed during production and/or at start-up of the device. This step is necessary in order to equalize the background function knowing the apriori touch background function stored in Fref. Equalization is performed supposing both background functions of Fpen;raw and Fref are proportional. Actually, Fraw and thus Fref has touches with negative polarity while Fpen;raw has touches with opposite polarity. Therefore the signal is inverted and the equalization becomes:

$$F_{pen}(i;j) = F(i,j)_{pen;raw} \cdot \frac{1 - \overline{F_{ref}}(i,j)}{1 - F_{ref}(i,j)} \qquad (6)$$

In the optimal case this will result in a constant (uniform) background in Fpen, which can then be subsequently used in the pen detection and localization algorithm. Thus it should be easy to modellize and get rid off. The equalizing step is preferably performed after the averaging step, the median filtering step and/or the image creation step. However, it is also possible to change the order and/or to perform only a subset of those steps in combination with the equalisation step.

The active object detection section 7 is configured to detect the actual position of an active object on the surface based on the data 3" received from the pre-processing section 6 or based on the measurement data 3 or 3', if no pre-processing is performed. The active object detection section 7 is further configured to detect the actual position of multiple active objects on the surface based on the data 3" received from the pre-processing section 6 or based on the measurement data 3 or 3', if no pre-processing is performed. Preferably, the equalized image Fpen is received from the pre-processing section 6 for detecting the position of an active object. An active object is preferably an active pen/stylus, but all other active objects actively emitting electromagnetic signals can be detected by the active object detection section 7. As already mentioned before, the active object detection section 7 receives within each detection time window one set of measurement data 3", e.g. the equalized image Fpen.

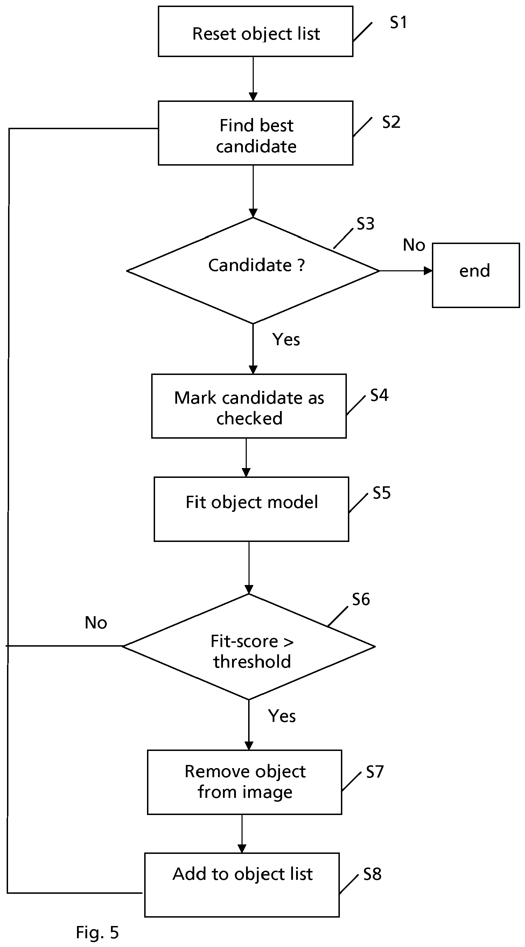

Fig. 5 shows now the detection process for detecting the position of the active object or the positions of multiple active objects for each detection time window. In a first step S1, an object list is reset such that it contains no detected object position. The object list will be filled with all active objects detected within the actual detection time window during the detection process.

In step S2, the best candidate for a detected object is found. In one embodiment, a ranked list of candidates for active object positions is prepared on the basis of the measurement data 3, 3' or 3" of the active pen mode. Alternatively, it would also be possible to detect in each iteration only the best candidate based on the image Fpen;corrected corrected in step S8 as explained later. In one embodiment, the candidates of the list of candidates are found on the basis of the extrema within Fpen. Since it is believed equivalent and it is computationally more efficient, the indices of the extrema are determined independently on the basis of the vectors fx and fy. Depending on the measurement data, the presence of the active object is represented by a maximum or a minimum. Depending on the measurement data, the corresponding extrema are determined. In the following, only maxima are mentioned as extrema, but if the active objects are represented by minima, the procedure works analogously. The number of maxima determined could be limited in order to limit the maximum number of candidates or a lower limit of the maxima could be determined in order to limit the number of candidates. In order to find the best candidates, the candidates are ranked. In the simplest case, the value of the maxima is used for the ranking. However, it is preferred to compute a score of each candidate depending on an expectation value of a peak caused by an active object and/or depending on the predicted position(s) (xp, yp) received from the active object tracking section 12. The active object tracking section 12 predicts the actual position of an active object which was detected in the previous detection time window(s) on the basis of the its recent position or its recent track. The candidate with the best score, i.e. with the peak value being closest to the expected peak value and/or with the positions being closest to one of the active positions detected in the recent detection window frames, will be ranked highest. An example for the score of the candidate with the k-th maximum would be

$$score[k] = \left(\frac{f(x_{max}[k],y_{max}[k])-\overline{f_{peak}}}{\sigma_{peak}}\right)^2 + \left(\frac{x_{max}[k]-x_p-\overline{\Delta x}}{\sigma_{\Delta x}}\right)^2 + \left(\frac{y_{max}[k]-y_p-\overline{\Delta y}}{\sigma_{\Delta y}}\right)^2 \quad (7)$$

wherein $x_{max}[k]$ is the k-th vector element of the vector $x_{max}$ containing the x-indices of the largest peaks, $y_{max}[k]$ is the k-th vector element of the vector $y_{max}$ containing the y-indices of the largest peaks, $\overline{f_{peak}}$ is the expected peak value of an active object on the surface, $f(x_{max}[k],y_{max}[k])$ is the measured peak value of the k-th maximum, $x_p$ is the x-position of the predicted position of an active object detected in the recent detection window(s), $y_p$ is the y-position of the predicted position of an active object detected in the recent detection window(s), $\overline{\Delta x}$ is the expected average step (or step size or increment) along x, $\overline{\Delta y}$ is the expected average step (or step size or increment) along y, and $\sigma_{\Delta x}$ and $\sigma_{\Delta y}$ are the expected standard deviations of the step (or step size or increment) along x respectively y. The candidates which have been marked as already checked, will not be considered for the best candidate such that recursively all candidates from the best to the worst are analysed.

The step (or step size or increment) can be named also as "velocity": in fact the only difference between a step $\overline{\Delta k}$ and a velocity is a multiplicative constant $\overline{\Delta t}$ which can be avoided because above formula (7) represent normalized values.

In a first embodiment, all the values of formula (7) are determined by the program itself and adapted while the device is running. In a second embodiment, they are determined in advance, e.g. statistically, and fed to the algorithm as external parameters. In a third embodiment, the first and the second embodiment are used together, i.e. external parameters are used for a start, and altered on the fly through new inputs.

In step S3, it is checked, if a candidate was found. This could be determined for example on the basis of the computed score. But also other decision criteria might be possible. If no candidate is found, the process ends. If a candidate is found, in step S4, the candidate found is marked as checked in order not to repeat this process for this candidate. The step S4 can be arranged anywhere between steps S2 and S8.

In step S5, a model for a pattern expected in the image Fpen during the presence of an active object on the surface is fitted to a data window around the position of the best candidate selected in step S3. With the described pre-processing, the model is a single Gaussian with a constant background as described in equations (1) to (4)

$$a\, e^{-\frac{(x-b_x(t))^2}{c^2}} + d_{x0} \qquad\qquad (8)$$

$$a\, e^{-\frac{(y-b_y(t))^2}{c^2}} + d_{y0} \qquad\qquad (9)$$

However, for other measurement equipment and/or other pre-processing other expected pattern distributions can be used. The Levenberg-Marquardt algorithm can be used to find the best parameter-set $(a,b_x,b_y,c,d_{x0},d_{y0})$, wherein the parameters $b_x,b_y$ give the sub-pixel exact position of the object to be detected. The two Gaussian distribution in x and y direction can be estimated separately or together with a corresponding 2D Gaussian distribution. The Levenberg-Marquardt algorithm is an iterative algorithm and the velocity and sometimes the quality of the output depends on good starting values for the parameters to be estimated. In order to have a good starting point for the parameters $b_x,b_y$ the

coordinates of the centre of gravity of the data window can be used. One easy way to calculate the centre of gravity is the use of the moments

$$(b_{x0}, b_{y0}) = \left(\frac{M_{10}}{M_{00}}, \frac{M_{01}}{M_{00}}\right) \text{ with} \tag{10}$$

$$M_{ij} = \sum_{y=y_{Cand}-L}^{y_{Cand}+L} \sum_{x=x_{Cand}-L}^{x_{Cand}-L} x^i y^j f_{pen}(x, y) \tag{11}$$

This yields already a robust and sufficiently good estimator for the sub-pixel exact position of the active object to be detected. The starting values for the other parameters can be predetermined.

A key problem in detecting the exact position of an object, especially for very small objects like touch pens or active pens, is the low number of measurement points involved and thus the low number of data points available for detecting the exact position. This is even more relevant for detecting objects which are arranged close to each other, e.g. within 2 to 5 measurement points (touch pixels), wherein the distance between two touch pixels is ca. 5 mm at the state of the art touch screens.

Therefore, in one embodiment the measurement data 3" is upsampled along each spatial dimension (x and y). This allows to compensate for the lower resolution of the physical sensing elements, especially when two targets are closely located. The signal is upsampled using an optimal reconstruction filter, which is given by the sinc kernel. It results in optimal reconstruction of the input targets for this particular type of signal that is very band-limited. An upsampling using a sinc-kernel is implemented using 2D Fourier transform, e.g. a Fast Fourier Transforms (FFT), and zero padding. Zero padding adds in the Fourier space sampling points with value zero between the discrete points of the Fourier transform. This yield a higher sampling rate considering all points of the signal and not only the neighbouring points when two sampling points are interpolated. Since 2D FFT is a separable operation along the horizontal and vertical axis, part of the invention claim is to use two 1D FFTs to compute 2D FFTs to upsample the measurement data 3" around the candidate position. It would be mathematically equivalent to perform a convolution of the data window with a sinc(x) function (sin(x)/x) in the space domain. However, convolution takes typically more operations to compute the result. The region for the upsampling can be rectangular of any size. However, it is computationally efficient to use side lengths which are powers of 2, i.e. with sizes 2, 4, 8, 16, 32 etc. touch pixels which yields an efficient computation of the Fourier transform. In 2D this results in a variety of possible region shapes and sizes: 2x2, 4x2, 4x4, 8x2, 8x4, 8x8 etc; this is at the same time hardware and power-efficient. Alternatively, if a large number of objects has to be detected on the surface or in a certain region, the upsampling can be performed on the complete data set Fpen or on the certain region. Surprisingly this increases the sensibility to closely located objects and reduces the error of the position by nearly 50%, even if the number of actually measured points remains the same.

Further problems linked to low-resolution are pixel-locking in subpixel localization: this effect results in stair-case like trajectories Remarkable observation is that using the appropriate target model in a nonlinear least-squares parameter optimization, those problems can be reduced in multi-touch and multi-stylus localization and allow to push the super-resolution limits from about 0.6 down to 0.4, which corresponds to an increase of subpixel resolution in up to +50%. If computational resources need to be saved, nonlinear least-squares parameter optimization can be avoided and replaced by a windowed centroid computation. The pixel-locking and stair-casing can be avoided by choosing the window size adaptively based on the input signal: when the input signal has rather an odd-sample symmetry (touch/pen close to center of pixel), the window size must be odd, when it has rather even-sample symmetry (touch/pen close to boarder between two adjacent pixels). Therefore, in one embodiment, the size of the fitting window becomes an additional fitting parameter in step S5. The parameter could be binary in the sense that only two sizes (one with odd length and one with even length) are possible. Alternatively, also the complete size of the window could be a fitting parameter. This has the advantage that the optimum window size is used for the fit, because larger windows have the problem that the noise outside the position of the object deteriorates the fitting result and smaller windows yield also inferior results because part of the pattern is cut out. In another embodiment, it could be detected, if the active stylus touch candidate has an odd- or even-sample symmetry. This could be performed by determining the rough position of the active stylus touch candidate, e.g. by computing the centroid of the measurements around the determined pixel precise position of the active stylus touch candidate. If this rough position is in one dimension closer to the centre between two touch pixels, an even window size is chosen in this dimension. If this rough position is in the one dimension closer to a touch pixel then to said centre, an odd window size is chosen in this dimension. The same can be performed for the second dimension. The determined rough position could be used then as well as a starting point for the fitting algorithm.

In step S6, it is tested, if a fit score computed from the fitting step in S5 fulfils certain criteria, e.g. to be above a certain threshold. A fit score gives a value of fitting quality of the function fitted on the data window. Thus, a lower score means a lower confidence in the fitting. Therefore, step S6 gives information if the present candidate corresponds to an object to be detected. If candidate is not an object to be detected, i.e. if the fit score does not fulfil certain criteria, the process goes back to step S2, where it finds or looks up the next best candidate. Otherwise, the process continues with step S7.

In this embodiment, the sub-pixel position detection in step S5 is based on a model fitting. However, it is also possible, to calculate the sub-pixel position with other measures, e.g. by the centre of gravity. This is advantageous, if the computation power is reduced and a low computational and efficient solution has to be provided. In this case, the test, if the candidate corresponds to an actual object to be detected can be performed on other measures e.g. on the basis of the score computed in step S2.

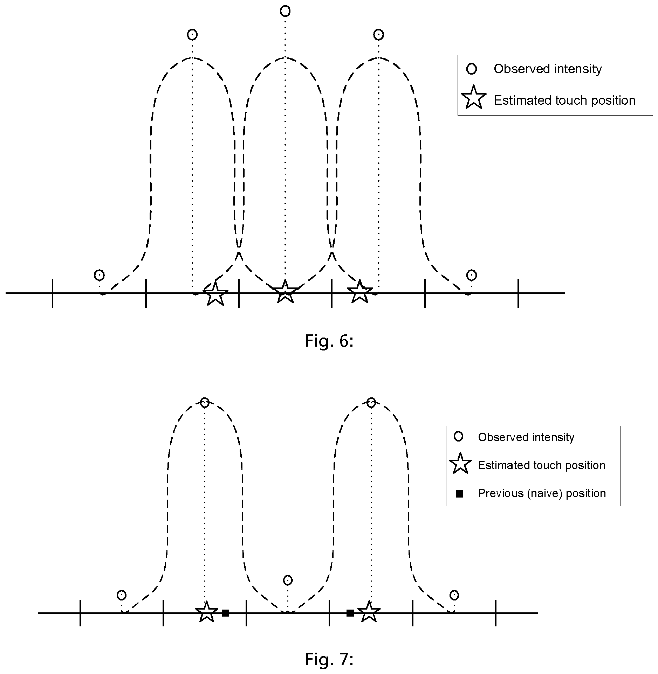

In step S7, the fitted function of step S5 is subtracted from the measurement data 3", e.g. Fpen. This has now the big advantage that subsequent candidates which are located close to the present candidate are not falsified by the data of the present candidate. This phenomenon is called group-center-locking illustrated in Fig. 6 and 7. When touches are spatially closely related, the estimated location of the outer candidate patterns (e.g. touch pattern, active pen pattern) is biased towards the center touch as can be seen in Fig. 6. The cause of this phenomenon lies in the strong spatial subsampling performed by the touch panel diamond size. The candidate in the centre of Fig. 6 is determined normally as the best candidate, because due to the influence of the neighbouring candidates it results in a stronger observed intensity. In step S7, the fitted function is subtracted from the measurement data 3", e.g. Fpen. Therefore, the successive candidates on the right and the left of the centre candidate can be fitted without any bias as seen in Fig. 7. This matching pursuit algorithm yields therefore optimal results for sub-pixel exact detection of the position. This approach is not limited to a sub-pixel detection by model fitting. If no model fitting is used in step S5, also a predetermined pattern can be subtracted from the measurement data 3" instead of the fitted function.

In step S8, the exact position determined in step S5 is added to the object list. Then the process goes back to step S2 until all candidates have been analysed.

Typical touch detection algorithms process the touch screen data by considering the multi-touch detection problem as several single-touch detection problems solved sequentially, usually following the raster scan order. The input data is explored until a suitable touch pattern is found then processed, then the processing system proceeds to the next tentative touch pattern. The same holds for active pen patterns. In the process described in Fig. 5, the problem of multi-touch/multi-object detection is considered as a global problem over the complete measurement data 3". A matching pursuit procedure is designed for the multi-object detection problem. When the best candidate is found in step S2, a suitable touch model is applied at this location to detect and precisely localize the object. Candidates that have a fitting score below a threshold are discarded. The application of the model is done by fitting, and touch candidates that yield a low fitting quality are discarded. This model is then subtracted from the input data and the system searches for the remaining best touch candidates and repeats the same procedure. This global procedure has several advantages. First the process starts with the best candidates. This means that candidates with a lower score can be estimated later without a deterioration of neighbouring better candidates. In addition, the result of the best candidate might already be further processed, if the best candidate confirms to be a detected object. The computation of the score of the candidates could already include the information of the object tracking 12, i.e. of previously detected object positions. In addition, the procedure has the further advantage that the positions of the candidates are detected at pixel level easily and computationally fast. The exact position of the object with sub-pixel precision and the determination, if the candidate is really a detected object is performed in a second step. Therefore, the algorithm for the sub-pixel detection can already start from a pixel-precise position of the potential object. This could be the starting value of the fitting algorithm and/or the window used around this rough pixel-precise position for computing the centre of gravity.

The touch detection section 8 could correspond to the active object detection section 7 detecting touches on the basis of the measurement data 4". The object model of step S5 can be different for the touches. However, it is possible to have a different detection procedure for the touches.

The touch tracking section 13 could correspond to the active object tracking section 12 tracking touche(s) on the basis of the recent detected positions of touch detection section 8 and/or on the basis of the measurement data 4".

The advanced detection section 14 could detect further properties of an active object on the basis of the received signal pattern, i.e. on the basis of the measurement data 4". In one embodiment, the arrangement of a pen is determined by this section. The arrangement comprises one or more of hover, z-distance, azimuth and elevation.

The control section 11 controls the remaining section of apparatus 10. In one embodiment, the control section 11 receives the positions detected by the active object detection section 7 and/or the touch detection section 8 and performs the control of the apparatus 10 on the basis of this position, e.g. displaying the position on a display, or gives out the position to another device like a display or another controller.

In the following embodiment, the following problem shall be resolved. A typical scan procedure of a touch screen is sequential: touch pixels are read one after another (fully sequential systems) or line by line (in which case the scan is sequential along the rows or columns). These scan procedures are simple and energy-efficient but they are not optimal for the touch detection and tracking application: the number of targets (and pixels of interest) is much lower than the total number of pixels of a touch screen. Typical values in the case of personal PC touch screens are 10 to 20 touches (corresponding to 100-200 excited touch pixels at most) for a panel with 10'000 touch pixels. Thus, most of the scan energy and time is spent scanning no-touch zones. This embodiment can be applied independently to the active object measurement and detection and/or to the touch object measurement and detection. However, the embodiment is only described in the context of the touch measurement and detection, but can be applied identically to the active object measurement and detection.

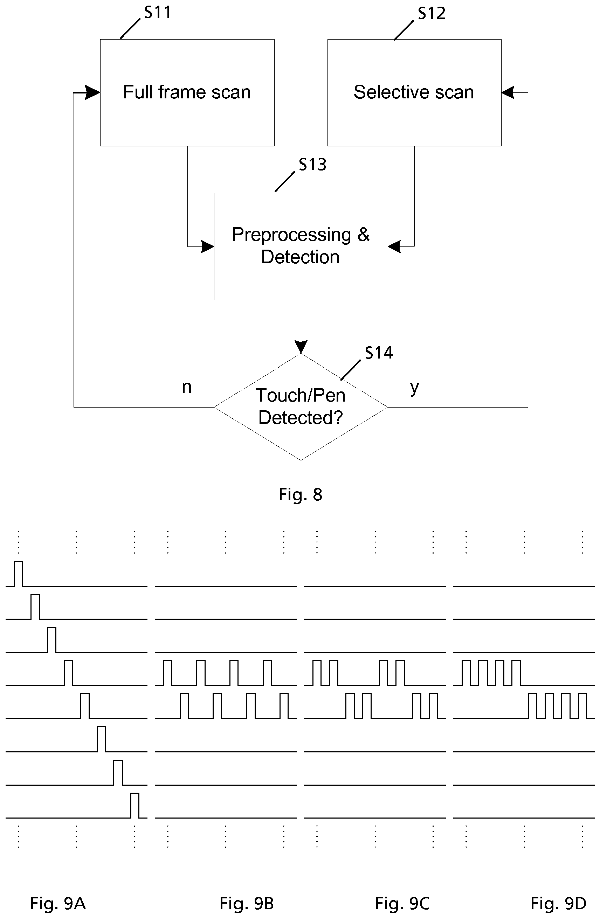

In this embodiment shown in Fig. 8, the control section 11 determines two different measurement modes, wherein the first measurement mode (full frame scan mode) is used, when no touch is detected and the second measurement mode (selective scan mode) is used, when at least one touch is detected. In the first measurement mode, all touch pixels are sequentially scanned in step S11. Therefore, the control section 11 sends timing windows to each of the sensing elements, e.g. in Fig. 1 and 3 to the charge drivers 206 which are therefore, sequentially driven to emit a charge. Such a time window signal for different positions sensors of the measurement section 2 is shown in Fig. 9A. In Fig. S13 all touches are detected on the basis of the full measurement data 4 as described in detail before. In step S14, if a touch was detected, the control section 11 switches the measurement section 2 to the second measurement mode in step S12. Otherwise the steps S11 and S13 are repeated until a touch is detected.

In the second measurement mode in S12, first a region around the recent detected position is defined. In the case, that several touches have been detected, several regions have been defined, one for each touch. If two or more touches are located close to each other, it is also possible to define one common region for those touches. Such a region can be chosen quite small and should respect the width of the touch pattern and the maximal distance of a position of the touch predicted for the next detection frame. The side length of such a region could for example be smaller than 15 or 10 touch pixels.

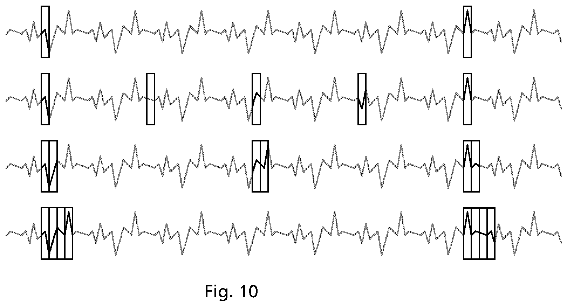

Then in the second measurement mode, the measurement pattern for the measurement section 2 is changed such that the sensing elements corresponding to the defined region(s) are measured more frequently than sensing elements outside of this region or of these regions in case of multiple regions. "More frequently" shall include also the case that some or all of the sensing elements not related to the defined region(s) are not measured at all in the second measurement mode. "More frequently" shall not infer that the measurements at the sensing elements have to be at a fixed frequency and/or have to be measured with a repetitive measurement pattern. Any other random and not repetitive measurement pattern is possible, if in a certain time period the number of measurements related to the defined region(s) is higher than the number of measurements related not to the defined region(s). Fig. 9B, 9C and 9D show different examples for such measurement pattern. In Fig. 9B all sensing elements (here two) related to the defined region are measured sequentially and when the last sensing element of the defined region has been measured the measurement restarts with the first one of the defined region. In Fig. 9C and D, each sensing element is measured N times before the next sensing element is measured. However, Fig. 9B to 9D are only examples and shall not restrict the invention. Fig. 10 shows the measurement periods (rectangles) of one sensing element for the measurement patterns shown in Fig. 9A to 9D. In the first line, the pattern of Fig. 9A which corresponds to the first measurement mode is shown. The second to fourth line correspond to the measurement patterns of Fig. 9B to 9D. As can be seen, the number of measurements for the relevant sensing element in the second measurement mode is higher (four times) than in the first measurement mode for the same time period. This reduces not only severely the time for determining the relevant measurement points in the measurement section 12 and in step S12, but reduces also severely the time of step S13 to pre-process the measured data in the pre-processing section 5 and in the touch detection section 8. This is caused by the fact that only the small measured window of the defined region(s) has to be processed. Therefore, it is possible to increase the detection frequency in the second measurement mode. Alternatively or additionally, the number of measurements used for the averaging step in the pre-processing section 5 can be increased, even if the detection frequency is reduced. Therefore, the second measurement mode allows to increase the detection frequency and thus the reactivity of the apparatus 10 and/or increases the quality of the measurements by increasing the number of realizations used for one detection time window.

In step S13, preferably the same steps as in the first measurement mode are performed, but only for the defined region(s). If there are more regions, then the pre-processing and detection step is performed for each region. The control section 11 might change some parameters like the frequency of detection or the number of realizations used for averaging in the pre-processing. In step S14, it is again checked if at least one touch was detected in S13 in the data window(s) with the reduced size(s). If yes, the process remains in the second measurement mode and goes back to S12. Otherwise, the process switches back to the first measurement mode and goes to S11. In step S12, the region or the regions are redefined on the basis of the new detected position(s) of the touch(s).

## Claims

1. Method for localizing an active stylus on a capacitive touch device, the capacitive touch device comprising a first array of charge sensors in a first direction, and a second array of charge sensors in a second direction different from the first direction, wherein the first array of charge sensors is arranged for measuring a first data vector, the second array of charge sensors is arranged for measuring a second data vector,
the method comprising the following steps:

- localizing the active stylus with a first precision,
- localizing the active stylus with a second precision higher than the first precision

wherein the step of localizing the active stylus with a first precision comprises:

- localizing active stylus touch candidates,

and wherein the step of localizing the active stylus with a second precision comprises:

- fitting a model function to each active stylus touch candidate,
- associating a fitting score to said fitting,
- discarding active stylus touch candidates depending on said fitting score and a fitting threshold,
- subtracting the fitted model function from the first data vector and the second data vector, before fitting said model function to a subsequent active stylus touch candidate.

2. The method of claim 1, wherein the first precision is a pixel-precision, and the second precision is a sub-pixel precision.

3. The method according to one of claims 1 or 2, wherein the step of localizing active stylus touch candidates comprises:

- find maxima in the first and in the second data vectors by using a threshold,
- computing a candidate score for each maximum in the first and in the second data vectors,
- on the basis of said candidate score, selecting the maximum in the first and in the second data vectors as a coordinate of the active stylus touch candidate.

4. The method of claim 3, wherein the candidate score depends on the tracking of the active stylus at a previous temporal instance.

5. The method of one of claims 1 to 4, comprising:

- upsampling the data of the first data vector and/or the second data vector in a region of the capacitive touch screen by using a sinc Kernel.

6. The method of claim 5, wherein the upsampling is perfomed by using a Fast Fourier Transform.

7. The method claim 6, comprising

- applying a 1D Fast Fourier Transform to the first data vector in said region, and
- applying a 1D Fast Fourier Transform to the second data vector in said region.

8. The method of one of claims 5 to 7, comprising:

- zero padding the Fourier transformed data.

9. The method of one of claims 5 to 8, wherein the region has a rectangular shape having at least a side of $2^n$ pixels, wherein n is an integer number.

10. The method of one of claims 1 to 9, wherein the step of localizing the active stylus with a first precision comprises further:

- localizing a best of the active stylus touch candidates, wherein the step of localizing the active stylus with a second precision comprises further:

- fitting a model function to the best of the active stylus touch candidates,
- subtracting the fitted model function from the first data vector and the second data vector,

and wherein the steps of localizing the active stylus with a first precision and localizing the active stylus with a second precision are repeated for the first data vector and the second data vector subtracted by the fitted model.

11. The method of one of claims 1 to 10, wherein the model function is fitted to each active stylus touch candidate within a fitting window and wherein the size of the fitting window is adaptively based on the first and the second data vectors with an odd window size, if the signal emitted from the active stylus has an odd-sample symmetry, and with an even window size, if the signal emitted from the active stylus has an even-sample symmetry.

12. The method of one of the previous claims, wherein the capacitive touch panel comprises a plurality of sensing elements, said method comprising the steps of:

- scanning the sensing elements during a time frame,
- detecting the position of the active stylus on the basis of this scanning,
- determining a detection region around the detected position of the active stylus, said detection region comprising a sub-set of sensing elements,
- during the next time frames, scanning the sub-set of sensing elements more frequently than the sensing elements outside said detection region.

13. The method of the previous claim, comprising a first measurement mode, when the position of the active stylus is not detected, and a second measurement mode, when the position of the active stylus is detected, wherein in the second measurement mode, the sub-set of sensing elements are scanned more frequently than the sensing elements outside said detection region.

14. Apparatus for localizing an active stylus on a capacitive touch device, the capacitive touch device comprising a first array of charge sensors in a first direction, and a second array of charge sensors in a second direction different from the first direction, wherein the first array of charge sensors is arranged for measuring a first data vector, the second array of charge sensors is arranged for measuring a second data vector,
the apparatus comprising:

- a first computing module arranged for localizing the active stylus with a first precision,
- a second computing module arranged for localizing the active stylus with a second precision higher than the first precision
wherein the first computing module is arranged for:

- localizing active stylus touch candidates,

and wherein the second computing module is arranged for:

- fitting a model function to each active stylus touch candidate,
- associating a fitting score to said fitting,
- discarding active stylus touch candidates depending on said fitting score and a fitting threshold,
- subtracting the fitted model function from the first data vector and the second data vector, before fitting said model function to a subsequent active stylus touch candidate.

15. The apparatus of the previous claim, the first computing module and the second computing module being the same module.

16. A computer program product comprising instructions which, when executed by a computer, cause the computer to localize an active stylus on a capacitive touch device, the capacitive touch device comprising a first array of charge sensors in a first direction, and a second array of charge sensors in a second direction different from the first direction, wherein the first array of charge sensors is arranged for measuring a first data vector, the second array of charge sensors is arranged for measuring a second data vector, comprising:

a tangible computer usable medium including computer usable program code comprising instructions which, when executed by a computer, cause the computer to localize an active stylus on a capacitive touch device, the computer usable program code being used for

- localizing the active stylus with a first precision,

- localizing the active stylus with a second precision higher than the first precision

wherein the step of localizing the active stylus with a first precision comprises:

- localizing active stylus touch candidates,

and wherein the step of localizing the active stylus with a second precision comprises:

- fitting a model function to each active stylus touch candidate,
- associating a fitting score to said fitting,
- discarding active stylus touch candidates depending on said fitting score and a fitting threshold,
- subtracting the fitted model function from the first data vector and the second data vector, before fitting said model function to a subsequent active stylus touch candidate.

**Patentansprüche**

1. Verfahren zum Lokalisieren eines aktiven Eingabestifts auf einer kapazitiven Berührungsvorrichtung, wobei die kapazitive Berührungsvorrichtung umfasst: eine erste Anordnung von Ladungssensoren in einer ersten Richtung und eine zweite Anordnung von Ladungssensoren in einer zweiten Richtung, die sich von der ersten Richtung unterscheidet, wobei die erste Anordnung von Ladungssensoren zum Messen eines ersten Datenvektors angeordnet ist, die zweite Anordnung von Ladungssensoren zum Messen eines zweiten Datenvektors angeordnet ist, wobei das Verfahren die folgenden Schritte umfasst:

- Lokalisieren des aktiven Eingabestifts mit einer ersten Genauigkeit;
- Lokalisieren des aktiven Eingabestifts mit einer zweiten Genauigkeit, welche höher als die erste Genauigkeit ist,

worin der Schritt des Lokalisierens des Tastkandidaten des aktiven Eingabestifts mit einer ersten Genauigkeit umfasst:

- Lokalisieren von Tastkandidaten des aktiven Eingabestifts,

und worin der Schritt des Lokalisierens des aktiven Eingabestifts mit einer zweiten Genauigkeit umfasst:

- Anpassen einer Modellfunktion an jeden Tastkandidaten des aktiven Eingabestifts,
- Zuordnen einer Anpassungsbewertung zum besagten Anpassen,
- Verwerfen von Tastkandidaten des aktiven Eingabestifts in Abhängigkeit von der Anpassungsbewertung und einer Anpassungsschwelle,
- Subtrahieren der angepassten Modellfunktion vom ersten Datenvektor und vom zweiten Datenvektor, bevor die besagte Modellfunktion an einen nachfolgenden Tastkandidaten des aktiven Eingabestifts angepasst wird.

2. Verfahren gemäss Anspruch 1, worin die erste Genauigkeit eine Pixelgenauigkeit ist und die zweite Genauigkeit eine Subpixelgenauigkeit ist.

3. Verfahren gemäss einem der Ansprüche 1 oder 2, worin der Schritt des Lokalisierens von Tastkandidaten des aktiven Eingabestifts umfasst:

- Finden von Maxima im ersten und im zweiten Datenvektor unter Verwendung einer Schwelle,
- Berechnen einer Kandidatenbewertung für jedes Maximum im ersten und im zweiten Datenvektor
- Auswählen des Maximums im ersten und im zweiten Datenvektor auf der Grundlage der besagten Kandidatenbewertung als Koordinate des Tastkandidaten des aktiven Eingabestifts.

4. Verfahren gemäss Anspruch 3, worin die Kandidatenbewertung von der Verfolgung des aktiven Eingabestifts in einem vorherigen zeitlichen Ereignis abhängt.

5. Verfahren gemäss einem der Ansprüche 1 bis 4, umfassend:

- Upsampling der Daten des ersten Datenvektors und/oder des zweiten Datenvektors in einem Bereich des kapazitiven Berührungsbildschirms unter Verwendung eines Sinc-Kernels.

6. Verfahren gemäss Anspruch 5, worin das Upsampling unter Verwendung einer Fast-Fourier-Transformation durchgeführt wird.

7. Verfahren gemäss Anspruch 6, umfassend

- Anwenden einer 1D-Fast-Fourier-Transformation auf den ersten Datenvektor im besagten Bereich und
- Anwenden einer 1D-Fast-Fourier-Transformation auf den zweiten Datenvektor im besagten Bereich.

8. Verfahren gemäss einem der Ansprüche 5 bis 7, umfassend:

- Anhängen von Nullen an den Fourier-transformierten Daten.

9. Verfahren gemäss einem der Ansprüche 5 bis 8, worin der Bereich eine rechteckige Form mit mindestens einer Seite von 2^n Pixeln aufweist, wobei n eine ganze Zahl ist.

10. Verfahren gemäss einem der Ansprüche 1 bis 9, worin der Schritt des Lokalisierens des aktiven Eingabestifts mit einer ersten Genauigkeit auch Folgendes umfasst:

- Lokalisieren eines Besten der Tastkandidaten des aktiven Eingabestifts,

worin der Schritt des Lokalisierens des aktiven Eingabestifts mit einer zweiten Genauigkeit zudem auch Folgende umfasst:

- Anpassen einer Modellfunktion an jeden Tastkandidaten des aktiven Eingabestifts,
- Subtrahieren der angepassten Modellfunktion vom ersten Datenvektor und vom zweiten Datenvektor,

und worin die Schritte des Lokalisierens des aktiven Eingabestifts mit einer ersten Genauigkeit und des Lokalisierens des aktiven Eingabestifts mit einer zweiten Genauigkeit für den ersten Datenvektor und für den zweiten Datenvektor nach Abzug des angepassten Modells wiederholt wird.

11. Verfahren gemäss einem der Ansprüche 1 bis 10, worin die Modellfunktion an jeden Tastkandidaten des aktiven Eingabestifts innerhalb eines Anpassungsfensters angepasst wird, und worin die Grösse des Anpassungsfensters adaptiv auf dem ersten und dem zweiten Datenvektor basiert, mit einer ungeraden Fenstergrösse, wenn das vom aktiven Eingabestift ausgegebene Signal eine ungerade Abtastwertsymmetrie aufweist, und mit einer geraden Fenstergrösse, wenn das vom aktiven Eingabestift ausgegebene Signal eine gerade Abtastwertsymmetrie aufweist.

12. Verfahren gemäss einem der vorhergehenden Ansprüche, worin das kapazitive Berührungsfeld eine Vielzahl von Sensorelementen umfasst, wobei das besagte Verfahren die folgenden Schritte umfasst:

- Abtasten der Sensorelemente während eines Zeitrahmens;
- Erfassen der Position des aktiven Eingabestifts auf der Grundlage von diesem Abtasten,
- Bestimmen eines Erfassungsbereichs um die erfasste Position des aktiven Eingabestifts, wobei der besagte Erfassungsbereich einen Untersatz von Erfassungselementen umfasst,
- während der nächsten Zeitrahmen: Abtasten des Untersatzes von Erfassungselementen häufiger als für die Erfassungselemente ausserhalb des Erfassungsbereichs.

13. Verfahren gemäss dem vorhergehenden Anspruch, umfassend einen ersten Messmodus, wenn die Position des aktiven Eingabestifts nicht erfasst wird, und einen zweiten Messmodus, wenn die Position des aktiven Eingabestifts erfasst wird, wobei im zweiten Messmodus der Untersatz von Sensorelementen häufiger als die Sensorelemente ausserhalb des Erfassungsbereichs abgetastet wird.

14. Vorrichtung zum Lokalisieren eines aktiven Eingabestifts auf einer kapazitiven Berührungsvorrichtung, wobei die kapazitive Berührungsvorrichtung umfasst: eine erste Anordnung von Ladungssensoren in einer ersten Richtung und eine zweite Anordnung von Ladungssensoren in einer zweiten Richtung, die sich von der ersten Richtung unterscheidet, wobei die erste Anordnung von Ladungssensoren zum Messen eines ersten Datenvektors angeordnet ist, die zweite Anordnung von Ladungssensoren zum Messen eines zweiten Datenvektors angeordnet ist, wobei die Vorrichtung Folgendes umfasst:

- ein erstes Berechnungsmodul, welches zum Lokalisieren des aktiven Eingabestifts mit einer ersten Genauigkeit angeordnet ist,
- ein zweites Berechnungsmodul, welches zum Lokalisieren des aktiven Eingabestifts mit einer zweiten Genauigkeit, welche höher als die erste Genauigkeit ist,

worin das erste Berechnungsmodul angeordnet ist zum:

- Lokalisieren von Tastkandidaten des aktiven Eingabestifts,

und worin das zweite Berechnungsmodul angeordnet ist zum:

- Anpassen einer Modellfunktion an jeden Tastkandidaten des aktiven Eingabestifts,
- Zuordnen einer Anpassungsbewertung zum besagten Anpassen,
- Verwerfen von Tastkandidaten des aktiven Eingabestifts in Abhängigkeit von der besagten Anpassungsbewertung und einer Anpassungsschwelle,
- Subtrahieren der angepassten Modellfunktion vom ersten Datenvektor und vom zweiten Datenvektor, bevor die besagte Modellfunktion an einen nachfolgenden Tastkandidaten des aktiven Eingabestifts angepasst wird.

15. Vorrichtung gemäss dem vorhergehenden Anspruch, wobei das erste Berechnungsmodul und das zweite Berechnungsmodul das gleiche Modul sind.

16. Computerprogrammprodukt mit Anweisungen, welche, wenn sie durch einen Rechner ausgeführt werden, den Rechner zum Lokalisieren eines aktiven Eingabestifts auf einer kapazitiven Berührungsvorrichtung veranlassen, wobei die kapazitive Berührungsvorrichtung umfasst: eine erste Anordnung von Ladungssensoren in einer ersten Richtung und eine zweite Anordnung von Ladungssensoren in einer zweiten Richtung, die sich von der ersten Richtung unterscheidet, wobei die erste Anordnung von Ladungssensoren zum Messen eines ersten Datenvektors angeordnet ist, die zweite Anordnung von Ladungssensoren zum Messen eines zweiten Datenvektors angeordnet ist, umfassend:

- ein materielles computerlesbares Medium umfassend einen computerlesbaren Programmcode mit Anweisungen, welche, wenn sie durch einen Rechner ausgeführt werden, den Rechner zum Lokalisieren eines aktiven Eingabestifts auf einer kapazitiven Berührungsvorrichtung veranlassen, wobei der vom Computer verwendbare Programmcode verwendet wird zum
- Lokalisieren des aktiven Eingabestifts mit einer ersten Genauigkeit;
- Lokalisieren des aktiven Eingabestifts mit einer zweiten Genauigkeit, welche höher als die erste Genauigkeit ist,

worin der Schritt des Lokalisierens des Tastkandidaten des aktiven Eingabestifts mit einer ersten Genauigkeit umfasst:

- Lokalisieren von Tastkandidaten des aktiven Eingabestifts,

und worin der Schritt des Lokalisierens des aktiven Eingabestifts mit einer zweiten Genauigkeit umfasst:

- Anpassen einer Modellfunktion an jeden Tastkandidaten des aktiven Eingabestifts,
- Zuordnen einer Anpassungsbewertung zum besagten Anpassen,
- Verwerfen von Tastkandidaten des aktiven Eingabestifts in Abhängigkeit von der Anpassungsbewertung und einer Anpassungsschwelle,
- Subtrahieren der angepassten Modellfunktion vom ersten Datenvektor und vom zweiten Datenvektor, bevor die besagte Modellfunktion an einen nachfolgenden Tastkandidaten des aktiven Eingabestifts angepasst wird.

**Revendications**

1. Procédé de localisation d'un stylet actif sur un dispositif tactile capacitif, le dispositif tactile capacitif comprenant un premier réseau de capteurs de charge dans une première direction et un second réseau de capteurs de charge dans une seconde direction différente de la première direction, la première un réseau de capteurs de charge est arrangé pour mesurer un premier vecteur de données, le deuxième réseau de capteurs de charge est arrangé pour mesurer un deuxième vecteur de données,

le procédé comprenant les étapes suivantes:

- localiser le stylet actif avec une première précision,
- localiser le stylet actif avec une seconde précision supérieure à la première précision

dans lequel l'étape de localisation du stylet actif avec une première précision comprend:

- localiser des candidats tactile du stylet actif,

et dans lequel l'étape de localisation du stylet actif avec une seconde précision comprend:

- adapter une fonction de modèle à chaque candidat tactile du stylet actif,
- associer un score d'adaptation à cette adaptation,
- rejeter les candidats tactile du stylet actif en fonction dudit score d'adaptation et d'un seuil d'adaptation,
- soustraire la fonction de modèle adaptée du premier vecteur de données et du second vecteur de données, avant d'adapter ladite fonction de modèle à un candidat tactile ultérieur du stylet actif.

2. Procédé selon la revendication 1, dans lequel la première précision est une précision au pixel, et la deuxième précision est une précision au sous pixel.

3. Procédé selon l'une des revendications 1 ou 2, dans lequel l'étape de localisation des candidats tactiles du stylet actif comprend:

- trouver des maxima dans les premier et second vecteurs de données en utilisant un seuil,
- calculer un score candidat pour chaque maximum dans les premier et second vecteurs de données,
- sur la base dudit score candidat, sélectionner le maximum dans les premier et second vecteurs de données en tant que coordonnée du candidat tactile du stylet actif.

4. Procédé selon la revendication 3, dans lequel le score candidat dépend du suivi du stylet actif dans un instant temporelle antérieure.

5. Procédé selon l'une des revendications 1 à 4, comprenant:

- sur-échantillonner les données du premier vecteur de données et/ou du deuxième vecteur de données dans une région de l'écran tactile capacitif en utilisant un kernel sine.

6. Procédé selon la revendication 5, dans lequel le sur-échantillonnage est réalisé en utilisant une transformation de Fourier rapide.

7. Procédé selon la revendication 6, comprenant

- appliquer une transformation de Fourier rapide 1D au premier vecteur de données dans ladite région, et
- appliquer une transformation de Fourier rapide 1D au second vecteur de données dans ladite région.

8. Procédé selon l'une des revendications 5 à 7, comprenant:

- zéro padding des données transformées de Fourier.

9. Procédé selon l'une des revendications 5 à 8, dans lequel la région a une forme rectangulaire ayant au moins un côté de $2^n$ pixels, dans lequel $n$ est un nombre entier.

10. Procédé selon l'une des revendications 1 à 9, dans lequel l'étape de localisation du stylet actif avec une première précision comprend en outre:

- localiser un des meilleurs candidats tactiles du stylet actif,

dans lequel l'étape de localisation du stylet actif avec une seconde précision comprend en outre:

- adapter une fonction de modèle au meilleur des candidats tactiles du stylet actif,
- soustraire la fonction de modèle adaptée du premier vecteur de données et du second vecteur de données,

et dans lequel les étapes consistant à localiser le stylet actif avec une première précision et à localiser le stylet actif avec une seconde précision sont répétées pour le premier vecteur de données et le second vecteur de données soustraits par le modèle adapté.

**11.** Procédé selon l'une des revendications 1 à 10, dans lequel la fonction de modèle est adaptée à chaque candidat tactile du stylet actif dans une fenêtre d'adaptation et dans lequel la taille de la fenêtre d'adaptation est basée de manière adaptative sur les premier et second vecteurs de données avec une taille de fenêtre impaire, si le signal émis par le stylet actif présente une symétrie d'échantillon impaire, et avec une taille de fenêtre paire, si le signal émis par le stylet actif présente une symétrie d'échantillon paire.

**12.** Procédé selon l'une des revendications précédentes, dans lequel le panneau tactile capacitif comprend une pluralité d'éléments de détection, ledit procédé comprenant les étapes consistant à:

- balayer les éléments sensibles pendant une période donnée,
- détecter la position du stylet actif sur la base de ce balayage,
- déterminer une région de détection autour de la position détectée du stylet actif, ladite région de détection comprenant un sous-ensemble d'éléments de détection,
- pendant les trames temporelles suivantes, balayer le sous-ensemble d'éléments de détection plus fréquemment que les éléments de détection en dehors de ladite région de détection.

**13.** Procédé selon la revendication précédente, comprenant un premier mode de mesure, lorsque la position du stylet actif n'est pas détectée, et un second mode de mesure, lorsque la position du stylet actif est détectée, dans lequel, dans le second mode de mesure, un sous-ensemble d'éléments de détection est balayé plus fréquemment que les éléments de détection situés à l'extérieur de ladite région de détection.

**14.** Appareil pour localiser un stylet actif sur un dispositif tactile capacitif, le dispositif tactile capacitif comprenant un premier réseau de capteurs de charge dans une première direction et un second réseau de capteurs de charge dans une seconde direction différente de la première direction, dans lequel le premier réseau de capteurs de charge est arrangé pour mesurer un premier vecteur de données, le deuxième réseau de capteurs de charge est arrangé pour mesurer un deuxième vecteur de données,
l'appareil comprenant:

- un premier module de calcul agencé pour localiser le stylet actif avec une première précision,
- un second module de calcul agencé pour localiser le stylet actif avec une seconde précision supérieure à la première précision
dans lequel le premier module de calcul est agencé pour:

- localiser des candidats tactiles du stylet actif,

et dans lequel le deuxième module de calcul est agencé pour:

- adapter une fonction de modèle à chaque candidat tactile du stylet actif,
- associer un score d'adaptation à cette adaptation,
- rejeter les candidats tactiles du stylet actif en fonction dudit score d'adaptation et d'un seuil d'adaptation,
- soustraire la fonction de modèle adaptée du premier vecteur de données et du second vecteur de données, avant d'adapter ladite fonction de modèle à un candidat tactile ultérieur du stylet actif.

**15.** Appareil selon la revendication précédente, le premier module de calcul et le deuxième module de calcul étant le même module.

**16.** Produit programme d'ordinateur comprenant des instructions lesquelles, lorsqu'elles sont exécutées par un ordinateur, permettent à l'ordinateur de localiser un stylet actif sur un dispositif tactile capacitif, le dispositif tactile capacitif comprenant un premier réseau de capteurs de charge dans une première direction et un second réseau de capteurs de charge dans une seconde direction différente de la première direction, dans lequel le premier réseau de capteurs de charge est arrangé pour mesurer un premier vecteur de données, le second réseau de capteurs de charge est arrangé pour mesurer un second vecteur de données, comprenant:

un support tangible utilisable par ordinateur comprenant un code de programme utilisable par ordinateur comprenant des instructions lesquelles,
lorsqu'elles sont exécutées par un ordinateur, permettent à l'ordinateur de localiser un stylet actif sur un dispositif tactile capacitif, le code de programme utilisable par ordinateur étant utilisé pour

- localiser le stylet actif avec une première précision,
- localiser le stylet actif avec une seconde précision supérieure à la première précision

dans lequel l'étape de localisation du stylet actif avec une première précision comprend:

- localiser des candidats tactiles du stylet actif,

et dans lequel l'étape de localisation du stylet actif avec une seconde précision comprend:

- adapter une fonction de modèle à chaque candidat tactile du stylet actif,
- associer un score d'adaptation à cette adaptation,
- rejeter les candidats tactiles au stylet actif en fonction dudit score d'adaptation et d'un seuil d'adaptation,
- soustraire la fonction de modèle adaptée du premier vecteur de données et du second vecteur de données, avant d'adapter ladite fonction de modèle à un candidat tactile ultérieur du stylet actif.

Fig. 1

Fig. 2

DSP

DSP

DSP

DSP

208 ..... CS ..... 208

Y[1]

Y[2]

Y[n-1]

Y[n]

206 X[1] X[2] 200 X[m-1] X[m]

201

Fig. 3

2 5 6

Measurement Section → 4 → A/D converter → 4' → Pre-processing Section

3 → 3'

3''

4''

11 10 7 8

Control Section

Active Object Detection Section

Touch Detection Section

14 12 13

Fig. 4

Advanced Detection Section

Active Object Tracking Section

Touch Tracking Section

```
                    ┌─────────────────┐
                    │ Reset object list│  ╱ S1
                    └─────────────────┘
                             │
                             ▼
      ┌────────────┌─────────────────┐
      │            │   Find best     │  ╱ S2
      │            │   candidate     │
      │            └─────────────────┘
      │                     │
      │                     ▼
      │                  ╱◇╲              No    ┌──────┐
      │                 ╱ S3 ╲───────────────▶ │ end  │
      │                ◇Candidate?◇             └──────┘
      │                 ╲      ╱
      │                  ╲◇╱
      │                   │ Yes
      │                   ▼
      │            ┌─────────────────┐
      │            │Mark candidate as│  ╱ S4
      │            │   checked       │
      │            └─────────────────┘
      │                     │
      │                     ▼
      │            ┌─────────────────┐
      │            │ Fit object model│  ╱ S5
      │            └─────────────────┘
      │                     │
      │                     ▼
      │         No       ╱◇╲
      │  ┌──────────────╱ S6 ╲
      │  │             ◇Fit-score >◇
      │  │              ╲threshold╱
      │  │               ╲◇╱
      │  │                │ Yes
      │  │                ▼
      │  │         ┌─────────────────┐
      │  │         │ Remove object   │  ╱ S7
      │  │         │  from image     │
      │  │         └─────────────────┘
      │  │                │
      │  │                ▼
      │  │         ┌─────────────────┐
      └──┴─────────│ Add to object list│  ╱ S8
                   └─────────────────┘
```

Fig. 5

Fig. 6:

Fig. 7:

S11

S12

Full frame scan

Selective scan

S13

Preprocessing &
Detection

S14

n

Touch/Pen
Detected?

y

Fig. 8

Fig. 9A          Fig. 9B          Fig. 9C          Fig. 9D

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013278550 A
- US 2013257783 A
- US 2012154324 A

- US 7437003 B
- WO 03052627 A
- US 7162098 B